# EUROPÄISCHE PATENTSCHRIFT

(11) **EP 0 589 250 B1**
(45) Veröffentlichungstag und Bekanntmachung des Hinweises auf die Patenterteilung: **02.01.2003**
(21) Anmeldenummer: 93113965.3
(22) Anmeldetag: 31.08.1993
(51) Int. Cl.: H04L 12/18, H04L 12/56, H04Q 11/04

(54) **Verfahren zum Rundsenden von Zellen in einem im Asynchron-Transfer-Modus wirkenden Kommunikationsnetz**
Method for cell broadcasting in ATM communication network
Procédé pour diffuser des cellules dans un réseau de communication à ATM

(30) Priorität: 14.09.1992 DE 4230744; 11.02.1993 DE 4304120
(43) Veröffentlichungstag der Anmeldung: 30.03.1994
(73) Patentinhaber: SIEMENS AKTIENGESELLSCHAFT, 80333 München (DE)
(72) Erfinder: Hummel, Heinrich Dipl.-Math., D-85232 Bergkirchen (DE)

(56) Entgegenhaltungen:
- EP-A- 0 420 493
- 1988 INTERNATIONAL ZURICH SEMINAR ON DIGITAL COMMUNICATIONS, ZURICH, MAR. 8 - 10, 1988, Nr. -, 8.März 1988, PLATTNER B;GUNZBURGER P, Seiten 221-229, XP000216017 LEE T T: "NON-BLOCKING COPY NETWORKS FOR MULTICAST PACKET SWITCHING"
- IEEE COMMUNICATIONS MAGAZINE, Bd. 29, Nr. 10, 1.Oktober 1991, Seiten 54-64, XP000271099 ISRAEL CIDON ET AL: "BANDWIDTH MANAGEMENT AND CONGESTION CONTROL IN PLANET"
- IBM TECHNICAL DISCLOSURE BULLETIN, Bd. 32, Nr. 9A, 1.Februar 1990, Seiten 120-122, XP000083016 "FLEXIBLE ROUTE DECODER FOR AN OMEGA SWITCH NETWORK"

## Beschreibung

Für zukünftige Kommunikationsnetze, insbesondere für Breitbandnetze, sind gemäß einem Asynchron-Transfer-Modus wirkende Kommunikationssysteme und Koppelstrukturen bzw. Koppeleinrichtungen vorgesehen. Bei diesem Asynchron-Transfer-Modus werden auf jedem Übertragungsabschnitt ununterbrochen Pakete fester Länge übertragen, die in der Fachwelt als Zellen bezeichnet werden. Diese Zellen bestehen aus 48 Oktetts für die Nutzinformation und 5 Oktetts für den Zellkopf. Ist gerade keine Nutzinformation zu senden, werden speziell markierte Leerzellen gesendet.

Ein gemäß dem Asynchron-Transfer-Modus wirkendes Kommunikationssystem bzw. eine Koppeleinrichtung ist ähnlich einem Kommunikationsnetz bzw. der Koppeleinrichtung herkömmlicher digitaler Kommunikationsnetze bzw. Kommunikationssyssteme in ein oder mehrere Netz- bzw. Koppelstufen strukturiert, wobei die einzelnen Kommunikationssysteme bzw. Koppelstufen untereinander derart vermascht sind, daß ein weitgehend blockierungsfreies Kommunikationssysstem bzw. eine Koppelstruktur entsteht. Die Eingangs- und Ausgangsleitungen eines derartigen Kommunikationssystems bzw. einer Koppelstruktur werden aus den im Zellkopf der Zelle angegebenen vermittlungstechnischen Informationen, d. h. aus virtuellen Wegeinformation und virtuellen Kanalinformation, ermittelt. Diese vermittlungstechnischen Informationen sind aus den von den Teilnehmern eines Kommunikationssystems signalisierten Rundsende- und Zielinformationen - d. h. Rufnummern der Zielteilnehmer - abgeleitet.

Aus der Druckschrift "ATM-Technologie für zukünftige Breitbandnetze" der Firma Siemens, Seite 17, rechte Spalte, ist bekannt, für die Vermittlung einer Zelle durch eine Koppelstruktur zusätzlich Routinginformationen aus den im Zellkopf der Zelle angegebenen Vermittlungsinformationen zu ermitteln und an die Zelle anzufügen. Mit Hilfe dieser Routinginformationen sucht sich die jeweilige Zelle den festgelegten Pfad durch eine n-stufige Koppelstruktur selbststeuernd, d. h. ohne Mitwirkung einer zentralen Kommunikationssystemsteuerung. Die zusätzlichen Routinginformationen werden in einen kommunikationssysteminternen Zellkopf eingefügt und vor die jeweilige Zelle gesetzt. Nach der Selbstvermittlung der Zelle durch die Koppelstruktur wird der kommunikationssysteminterne Zellkopf wieder entfernt.

Der Datenumfang vermittlungstechnischer Informationen des Zellenkopfes bzw. des kommunikationssysteminternen Zellkopfes wird im wesentlichen durch die Anzahl der Kommunikationssysteme bzw. der Koppelstufen bestimmt, wobei üblicherweise für ein Kommunikationssystem bzw. eine Koppelstufe ein Informationsstring, z. B. ein Byte, vorgesehen ist, die zu einem Block zusammengestellt werden. In zunehmendem Maße werden Zellköpfe bzw. kommunikationssysteminterne Zellköpfe definiert, die eine vorgegebene, auf die maximale Anzahl von Kommunikationssystemen bzw. Koppelstufen abgestimmte Anzahl von Informationsstrings, z. B. für fünf Kommunikationssysteme bzw. Koppelstufen fünf Bitoktetts bzw. Bytes, aufweisen.

Bei derartig strukturierten Zellköpfen bzw. kommunikationssysteminternen Zellköpfen kann im Falle des Rundsendens von Zellen an mehrere Ausgangsleitungen des Kommunikationsnetzes bzw. der Koppelstruktur das Selbststeuerungsprinzip der Zellen nicht mehr aufrechterhalten werden. Folglich werden in den, den Kommunikationssystemen bzw. Koppelstufen zugeordneten Speichern tabellenartig durch eine zentrale Kommunikationssystemsteuerung zusätzlich ermittelte Routinginformationen gespeichert, mit deren Hilfe die jeweilige Zelle erneut über einen oder mehrere abzweigende Pfade an die vorgegebenen Ausgangsleitungen übermittelt wird.

Aus der Druckschrift "Non-Blocking Copy Networks for Multicast Packet Switching", 1988 International Zurich Seminar on Digital Communications, Zürich, 8. bis 10.März 1988, Seiten 221-229, T.T.Lee, ist ein Paketvermittlungssystem bekannt, bei dem ein Rundsenden von Paketen über eine mehrstufige Banyan-Koppelstruktur beschrieben ist. Hierbei wird für jedes rundzusendende Paket ein vollständiger Pfad durch eine n-stufige Koppelstruktur beschrieben, wobei die für jeden Pfad ermittelten Routing-Informationen anstelle des ursprünglichen Zellkopfes mit dem jeweiligen Paket durch die Koppelfeldstruktur vermittelt werden. Da die Koppelelemente der n-stufigen Koppelstruktur jeweils zwei Ein- und Ausgänge aufweisen, können die Routing-Informationen für die jeweilige Koppelstufe durch binäre Routing-Informationen angegeben werden.

Die der Erfindung zugrundeliegende Aufgabe besteht darin, rundzusendende Zellen über n Kommunikationssysteme bzw. eine n-stufige Koppelstruktur unter Beibehaltung des Selbststeuerungs-Prinzips zu vermitteln. Die Aufgabe wird ausgehend von einem im Asynchron-Transfer-Modus wirkenden Kommunikationsnetz bzw. einer Koppelstruktur gemäß den Merkmalen der Oberbegriffe der Patentansprüche 1 und 8 durch deren kennzeichnende Merkmale gelöst.

Der wesentliche Aspekt des erfindungsgemäßen Verfahrens ist darin zu sehen, daß in den Zellkopf bzw. kommunikationssysteminternen Zellkopf zusätzlich Routinginformationen und Rundsendeinformationen eingefügt werden, mit deren Hilfe zum einen das erneute Aussenden von Zellen in den jeweiligen Kommunikationssystemen bzw. den Koppelstufen bewirkt wird und zum anderen diejenige Verbindungsleitung zum nächsten Kommunikationssystem bzw. zur nächsten Koppelstufe, d.h. der Pfad festgelegt wird, an die die erneut ausgesandte Zelle zu übermitteln ist. Die wesentlichen Kriterien des angegebenen Algorithmus zum Bilden von Routinginformationen und Rundsendeinformationen sowie die Auswertung und Verarbeitung dieser Informationen in den Kommunikationssystemen bzw. Koppelstufen sind darin zu sehen, daß durch eine Rundsendeinformation eine Pfadverzweigung in dem jeweiligen Kommunikationssystem bzw. der jeweiligen Koppelstufe angezeigt sowie ein erneutes Aussenden der jeweiligen Zelle bewirkt wird und in jedem Kommunikationssystem bzw. jeder Koppelstufe die jeweils dieses Kommunikationssystem bzw. diese Koppelstufe betreffenden, d.h. die die Verbindungsleitung zum nächsten Kommunikationssystem bzw. zur nächsten Koppelstufe bestimmenden Routing- und Rundsendeinformationen entfernt sowie die verbleibenden Rundsende- und Routinginformationen in den Zellkopf bzw. kommunikationssysteminternen Zellkopf eingefügt und über die bestimmte Verbindungsleitung an das folgende Kommunikationssystem bzw. die folgende Koppelstufe übermittelt werden. Ein Vorteil des erfindungsgemäßen Verfahrens ist darin zu sehen, daß für rundzusendende Zellen in den Kommunikationssystemen bzw. Koppelstufen die Speicherbereiche für die Pfadverzweigungen entfallen können.

Die Routinginformationen werden besonders vorteilhaft jeweils durch zumindest eine den Rundsendezielteilnehmer an dem Zielkommunikationssystem bestimmende Zielinformation und durch den jeweiligen Pfad durch das Kommunikationsnetz angebende Kommunikationssystem-Identifikationsinformationen repräsentiert, wobei jedem Kommunikationssystem des Kommunikationsnetzes eine unterschiedliche Kommunikationssystem-Identifikationsinformation zugeordnet ist - Anspruch 2. Die Zielinformation stellt üblicherweise die interne oder offizielle Rufnummer des Zielteilnehmers oder Teile dieser Rufnummer dar. Die Kommunikationssystem-Identifikationsinformationen stellen beispielsweise numerische Informationen dar, mit deren Hilfe ein Kommunikationssystem eindeutig im Kommunikationsnetz identifizierbar ist. Hierbei wird jedem Kommunikationssystem eine unterschiedliche numerische Information, z.B. Kommunikationssystem 1 bis 20, zugeordnet. Die Routinginformation ist zusätzlich durch jeweils weitere, jeweils an die Zielinformation angefügte Subadresseninformationen und/oder Teilnehmerinformationen und/oder Teilnehmranzeigeinformationen und/oder Signalisierungsreferenzpunktinformationen gebildet - Anspruch 3. Diese zusätzlichen Routinginformationen sind insbesondere für den Informationsaustausch zwischen den Teilnehmern und für eine Rücksendung von Zellen an den Ursprungsteilnehmer vorgesehen.

Die Rundsendeinformationen sind vorteilhaft durch eine das Ende des jeweiligen Pfades anzeigende Rundsendeblockinformation und durch eine Pfadverzweigungen einer in den Kommunikationssystemen anzeigende Abzweiginformation gebildet - Anspruch 4. Die Abzweiginformation ist vorteilhaft durch eine numerische Information repräsentiert, die, ausgehend von der zuletzt angegebenen Kommunikationssystem Identifikationsinformation, die Anzahl der auf dem durch den vorhergehenden Rundsendeinformationsblock bestimmten Pfad zurückliegenden Kommunikationssysteme angibt, in dem eine Pfadverzeigung auftritt - Anspruch 5. Dies bedeutet, daß die Abzweiginformation die Anzahl der Kommunikationssysteme angibt, die, ausgehend von der zuletzt genannten Kommunikationssystem-Identifikationsinformation des jeweiligen Rundsendeinformationsblockes zurückzuzählen sind, um das Kommunikationssystem zu bestimmen, in dem eine Pfadverzweigung auftritt. Das Ende eines Pfades, der zumindest durch eine Zielinformation und ggf. Kommunikationssystem Identifikationsinformationen gebildet ist, wird vorteilhaft durch eine Rundsendeblockendeinformation abgeschlossen. Durch diese Rundsenblockendeinformation wird einerseits das Ende des jeweiligen Pfades bestimmt und zum anderen angezeigt, daß eine weitere Pfadverzweigung vorliegt, wobei durch die Abzweiginformation das Kommunikationssystem bestimmt wird, in der eine Pfadverzweigung auftritt.

Die für eine Rundsendeverbindung vorgesehenen Routing- und Rundsendeinformationen sind vorteilhaft durch Verbindungsaufbaumeldungen von einem Ursprungsteilnehmer zum einem Rundsendezielteilnehmer zu übermitteln - Anspruch 6. Mit Hilfe dieser in Paket- und im Asynchron-Transfer-Modus wirkenden Netzen üblicherweise benutzten Verbindungsaufbaumeldungen werden jeweils virtuelle Verbindungen von dem Ursprungsteilnehmer zu den Rundsende-Zielteilnehmern eingerichtet.

In jedem der Kommunikationssysteme wird mit Hilfe einer Routing-Routine jeder Zellkopf auf das Vorliegen von Rundsendeinformationen und Routinginformatinen verifiziert - Anspruch 7. Mit Hilfe dieser Routing-Routine wird bei Vorliegen einer ersten Routinginformation im Zellkopf oder nach einer Rundsendeinformation durch diese Routinginformationen die zum nächsten Kommunkationssystem führende Verbindungsleitung oder die zu einem Zielteilnehmer führende Anschlußleitung bestimmt. Liegt eine weitere Rotinginfiormation vor, wird diese in einen Zellkopf eingefügt, der an das durch die erste Routinginformation bestimmte Kommunkationssystem übermittelt wird. Liegt eine Rundsendeinformation vor, so wird das Ende des vorhergehend zusammengestellten Routinginformationsblockes angezeigt und in Abhängigkeit von dem Informationsinhalt der in der Rundsendeinformation enthaltenen Abzweiginformation wird diese in den Zellkopf eingefügt oder entfernt.

Beim erfindungsgemäßen Verfahren für Koppelstrukturen - Anspruch 8 - werden die Rundsendeinformationen ebenfalls durch eine das Ende des vorhergehenden Routinginformationsblocks anzeigende Rundsendeblockinformation und durch eine eine Pfadverzweigung in einer der Koppelstufen anzeigende Koppelstufeninformation gebildet - Anspruch 9. Durch die jeweilige Rundsendeblockendeinformation wird der jeweiligen Koppelstufe angezeigt, daß der vorhergehend zusammengestellte Routinginformationsblock vollständig ist und im Sinne einer Übermittlung an die bestimmte Verbindungsleitung in einen kommunikationssysteminternen Zellkopf einzufügen ist. Die Koppelstufeninformation wird vorteilhaft durch eine numerische Information repräsentiert, die die Anzahl der auf dem durch den vorhergehenden Rundsendeinformationsblock bestimmten Pfad zurückliegenden Verbindungsleitungen angibt. Mit Hilfe der numerischen Information wird somit die zurückliegende Verbindungsleitung ermittelt und dadurch ist die Koppelstufe, von der Zellen über die ermittelte Verbindungsleitung übermittelt werden, als Koppelstufe bestimmt, in der eine Pfadverzweigung auftritt - Anspruch 10. Hierdurch wird erreicht, daß ausgehend von einer Verbindungsleitung und dem Pfad die bzw. der durch die letzte Routinginformation des vorhergehenden Rundsendeinformationsblocks bestimmt ist, durch die numerische Information die Anzahl der zurückliegenden Verbindungsleitungen angegeben ist und durch die Koppelstufe ermittelt wird, in der eine Pfadverzweigung auftritt, d. h. die jeweilige Zelle erneut ausgesendet wird.

Gemäß einer vorteilhaften Weiterbildung des erfindungsgemäßen Verfahrens ist in jeden kommunikationssysteminternen Zellkopf eine seinen Datenumfang repräsentierende Längeninformation eingefügt - Anspruch 11. Durch die Angabe einer Längeninformation wird die Erkennung und Auswertung des kommunikationssysteminternen Zellkopfes erleichtert. Ein weiterer wesentlicher Vorteil des erfindungsgemäßen Verfahrens ist darin zu sehen, daß durch Angabe einer Längeninformation, insbesondere bei einer Koppelstruktur mit wenigen Koppelstufen, der Datenumfang des kommunikationssysteminternen Zellkopfes für Zellen, die nicht rundzusenden sind, erheblich verkleinert wird. Dies bedeutet eine Steigerung der Zellendurchsatzrate durch die Koppelstruktur. Bei rundzusendenden Zellen ist gegebenenfalls der Datenumfang des kommunikationssysteminternen Zellkopfes größer als bei vom Datenumfang vorgegebenen Zellköpfen, jedoch wird durch Vermeidung zusätzlicher Speicherbereiche in den jeweiligen Koppelstufen für die zusätzlichen Routinginformationen dies hinsichtlich der Zellendurchsatzrate mehr als kompensiert. Darüber hinaus bleibt das Selbststeuerungs-Prinzip für Zellen durch eine Koppelstruktur ohne Einschränkungen auch für die Vermittlung von rundzusendenden Zellen erhalten.

Gemäß einer weiteren vorteilhaften Ausgestaltung des erfindungsgemäßen Verfahrens ist der Zellkopf Oktett- bzw. Byte-strukturiert sowie sind die Rundsende- bzw. die Routinginformationen durch binär codierte Bitoktetts bzw. Bytes repräsentiert. Die Längeninformationen ist hierbei durch die Zahl der den Zellkopf umfassenden Bitoktetts bzw. Bytes bestimmt - Anspruch 12. Eine Oktett- bzw. Bytestrukturierung erscheint besonders vorteilhaft, da hierdurch eine oktett- bzw. byteweise Verarbeitung sowohl des kommunikationssysteminternen Zellkopfes als auch des ebenfalls oktett- bzw. byteweise strukturierten Zellkopfes der Zelle möglich ist und folglich schaltungstechnisch gleichartige Realisierungen implementierbar sind.

Eine vorteilhafte Realisierung des erfindungsgemäßen Verfahrens wird durch eine Routing-Routine erreicht, die in jeder Koppelstufe der Koppelstruktur vorzusehen ist - Anspruch 13. Hierbei wird der Zellenkopf oktett- bzw. bytesequentiell auf das Vorliegen von Rundsende- bzw. Routineinformationen verifiziert. Mit Hilfe dieser einfachen, programmtechnisch realisierten Routing-Routine sind vorteilhaft sowohl einfache als auch rundzusendende Zellen ohne Einschränkungen hinsichtlich des Selbststeuerungsprinzips durch die Koppelstruktur zu vermitteln.

Im folgenden wird das erfindungsgemäße Verfahren anhand von zeichnerischen Darstellungen erläutert.

Dabei zeigen
- FIG 1: einen Vermittlungsablauf rundzusendender Zellen in einer dreistufigen ATM-Koppelstruktur,
- FIG 2: den kommunikationssysteminternen Zellkopf an einer Eingangsleitung gemäß FIG 1,
- FIG 3: den kommunikationssysteminternen Zellkopf gemäß der in FIG 1 bestimmten Koppelstufe,
- FIG 4 A,B: jeweils eine Rundsende- bzw. Routing-Information,
- FIG 5: ein Ablaufdiagramm einer Routing-Routine,
- FIG 6: einen Vermittlungsablauf rundzusendender Zellen in einem Kommunikationsnetz,
- FIG 7: einen Zellkopf gemäß dem in FIG 6 bestimmten Kommunikationssystem N1, und
- FIG 8: ein weiteres Ablaufdiagramm einer Routing-Routine für ein Kommuinkationsnetz nach FIG 6.

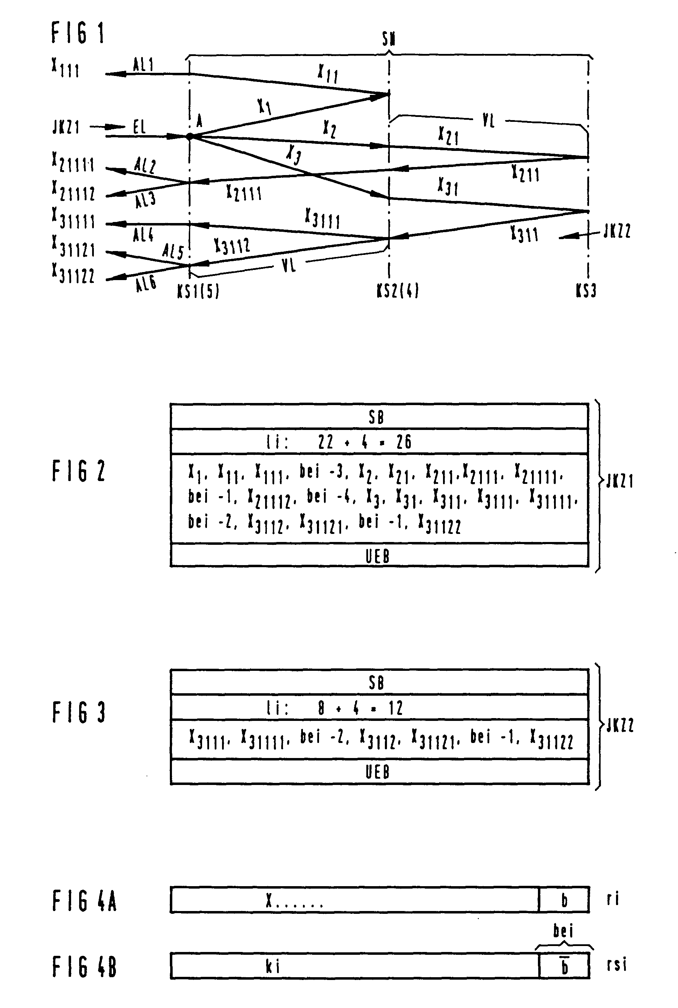

FIG 1 zeigt eine gemäß dem Asynchron-Transfer-Modus (im weiteren mit ATM bezeichnet) wirkende Koppelfeldstruktur SN, die drei Koppelstufen KS1...KS3 aufweist. Da die dritte Koppelstufe KS3 als Umkehrstufe ausgebildet ist, ergibt sich für das Ausführungsbeispiel eine fünfstufige Koppelstruktur SN, wobei durch die zweite sowohl die vierte und durch die erste sowohl die fünfte Koppelstufe KS1...KS5 realisiert ist. Folglich können die von dem zugehörigen Kommunikationssystem herangeführten Leitungen sowohl Eingangsleitungen EL, über die im Asynchron-Transfer-Modus gebildete Zellen an die Koppelstruktur SN geführt werden, als auch Ausgangsleitungen AL, über die die vermittelten Zellen an das Kommunikationssystem geführt werden, darstellen. Die Eingangs- und Ausgangsleitungen EL, AL werden in Abhängigkeit von den teilnehmersignalisierten Rundsende- und Zielinformationen ermittelt, d. h. aus im Zellkopf angegebenen virtuellen Wege- und Kanalinformationen abgeleitet. Für das Ausführungsbeispiel ist beispielsweise die in FIG 1 dargestellte Eingangsleitung EL ermittelt worden. Zwischen den Koppelstufen KS1...KS5 sind im Sinne einer Vermaschung der Koppelstufen KS1...KS5 Verbindungsleitungen VL angeordnet, wobei in FIG 1 lediglich die Verbindungsleitungen VL dargestellt sind, über die gemäß dem Ausführungsbeispiel Zellen übermittelt werden.

Für das Ausführungsbeispiel sei weiterhin angenommen, daß die über die Eingangsleitung EL herangeführten Zellen an die in FIG 1 dargestellten Abnehmerleitungen AL1...AL6 rundzusenden bzw. durch die Koppelstruktur SN zu vermitteln sind, wobei die Zellen in Abhängigkeit von der anzusteuernden Ausgangsleitung AL1...AL6 jeweils über die erforderliche Anzahl von Koppelstufen KS1...KS5 zu vermitteln sind.

Für diese Vermittlung wird vor jede zu vermittelnde Zelle ein in FIG 2 dargestellter, kommunikationssysteminterner Zellkopf IZK1 angefügt und über die Eingangsleitung EL an die erste Koppelstufe KS1 übermittelt. In diesem kommunikationssysteminternen Zellkopf IZK1 sind für jede der in FIG 1 dargestellten Verbindungsleitungen VL Routinginformationen ri, sowie für jede Pfadverzweigung eine Rundsendeinformation rsi enthalten - siehe FIG 4. Hierbei ist jede Routinginformation ri durch einen mit einer numerischen Information versehenen x-Wert repräsentiert, wobei dieser x-Wert jeweils die Adresse der von der jeweiligen Koppelstufe KS abgehenden Verbindungsleitung VL zur nächsten Koppelstufe KS angibt. Die ersten drei Routinginformationen x₁, x₁₁, x₁₁₁ geben den Pfad über die Koppelstruktur SN an, über den die jeweilige Zelle an die erste Abnehmerleitung AL1 zu vermitteln ist. Anschließend ist eine Rundsendeinformation rsi eingefügt, die durch eine Rundsendeblockende-Information bei und durch eine numerische Koppelstufeninformation ki - in FIG 2 die Ziffer 3 - gebildet ist. Durch die Rundsendeblockende-Information bei ist angezeigt, daß die vorhergehend angegebenen Rundsendeinformationen x₁, x₁₁, x₁₁₁ einen Pfad durch die Koppelstruktur SN vollständig definieren. Daraufhin wird die auf die erste Koppelstufe KS1 bezogene Routinginformation x₁ entfernt sowie werden die verbleibenden Routinginformationen x₁₁, x₁₁₁ in einen in der ersten Koppelstufe KS1 gebildeten kommunikationssysteminternen Zellkopf IZK eingefügt und zusammen mit der Zelle über die durch die Routinginformation x₁ bestimmte Verbindungsleitung VL übermittelt. Durch die die Ziffer 3 repräsentierte Koppelstufeninformation ki ist ausgedrückt, daß ausgehend von der der zuletzt angegebenen Routinginformation x₁₁₁ zugeordneten Verbindungsleitung VL eine Pfadverzweigung in der drei Verbindungsleitungen VL zurückliegenden, Zellen auf die zurückliegende Verbindungsleitung VL übermittelnden Koppelstufe KS1 auftritt, wobei als Verbindungsleitung VL auch die Ausgangs- und Eingangsleitungen EL, AL bewertet werden. Dies bedeutet, daß eine Pfadverzweigung in der ersten Koppelstufe KS1 auftritt. Die folgenden Routinginformationen x₂, x₂₁, x₂₁₁, x₂₁₁₁ und x₂₁₁₁₁ geben den Pfad der erneut auszusendenden Zelle bis zur Abnehmerleitung AL2 an. Durch die anschließend eingefügte Rundsendeblockende-Information bei wird angezeigt, daß der abzweigende Pfad vollständig definiert ist und durch die folgende Koppelstufeninformation ki wird argegeben, daß in der fünften Koppelstufe KS5 ein weiterer Pfad abzweigt. Die anschließende Routinginformation x₂₁₁₁₁ bestimmt die abzweigende Verbindungsleitung, die im Ausführungsbeispiel durch die dritte Abnehmerleitung AL3 repräsentiert ist. Die folgende Rundsendeinformation rsi zeigt wiederum die Bestimmung eines vollständigen Pfades an und durch die darin enthaltende Koppelstufeninformaticn ki ist festgelegt, daß in der ersten Koppelstufe KS1 eine weitere Pfadverzweigung auftritt. Die angefügten Routinginformationen x₃, x₃₁, x₃₁₁, x₃₁₁₁, x₃₁₁₁₁ legen den Vermittlungspfad der Zelle durch die fünf Koppelstufen KS1... KS5 zur vierten Ausgangsleitung AL4 fest. Die anschließende Rundsendeinformation rsi zeigt erneut an, daß ein abzweigender Pfad vollständig definiert ist und durch die Koppelstufeninformation ki ist bestimmt, daß eine weitere Pfadverzweigung in der vierten Koppelstufe KS4 vorliegt. Die anschließenden Routing-Informationen x₃₁₁₂, x₃₁₁₂₁ zeigen den abzweigenden Vermittlungspfad der Zelle zur fünften Ausgangsleitung AL5. Durch die zuletzt angegebene Rundsendeinformation rsi ist ein zusätzlich abzweigender Pfad in der fünften Koppelstufe KS5 bestimmt. Die zugehörige Routinginformation x₃₁₁₂₂ gibt die abzweigende Verbindungsleitung VL an, die im Ausführungsbeispiel durch die sechste Ausgangsleitung AL6 bestimmt ist. Vor die Routing- und Rundsendeinformationen ri, rsi ist ein die Längeninformation li enthaltendes Byte angefügt. Die Längeninformation li gibt die Anzahl der Bytes des kommunikationssysteminternen Zellkopfes IZK1 an - im Ausführungsbeispiel 26 Bytes. Des weiteren ist der kommunikationssysteminterne Zellkopf IZK1 generell durch ein vorangestelltes Synchronisationsbyte SB sowie zwei nachgestellte Übertragungsbytes ÜB gebildet, die für die Synchronisation der empfangenen Bytes sowie für die Übertragung übertragungsspezifischer Informationen vorgesehen sind.

Dieser in der ersten Koppelstufe KS1 empfangene kommunikationssysteminterne Zellkopf IZK1 wird in der ersten Koppelstufe KS1 ausgewertet und jeweils die koppelstufenspezifischen Rundsende- und Routinginformationen rsi, ri entfernt; auf das Ausführungsbeispiel bezogen sind dies die Routinginformationen x₁, x₂ und x₃. Die verbleibenden Rundsende- und Routinginformationen rsi, ri werden in weitere, in dieser Koppelstufe KS1 gebildete kommunikationssysteminterne Zellköpfe IZK eingefügt und an die durch die Routinginformationen x₁, x₂ und x₃ bestimmten Verbindungsleitungen weitergeleitet. Beispielhaft für die in jeder Koppelstufe KS1...KS5 gebildeten kommunikationssysteminternen Zellköpfe IZK ist in FIG 3 der kommunikationssysteminterne Zellkopf IZK2 dargestellt, der von der dritten Koppelstufe KS3 zur vierten Koppelstufe KS4 über die durch die Routinginformation x₃₁₁ festgelegten Verbindungsleitung VL übermittelt wird.

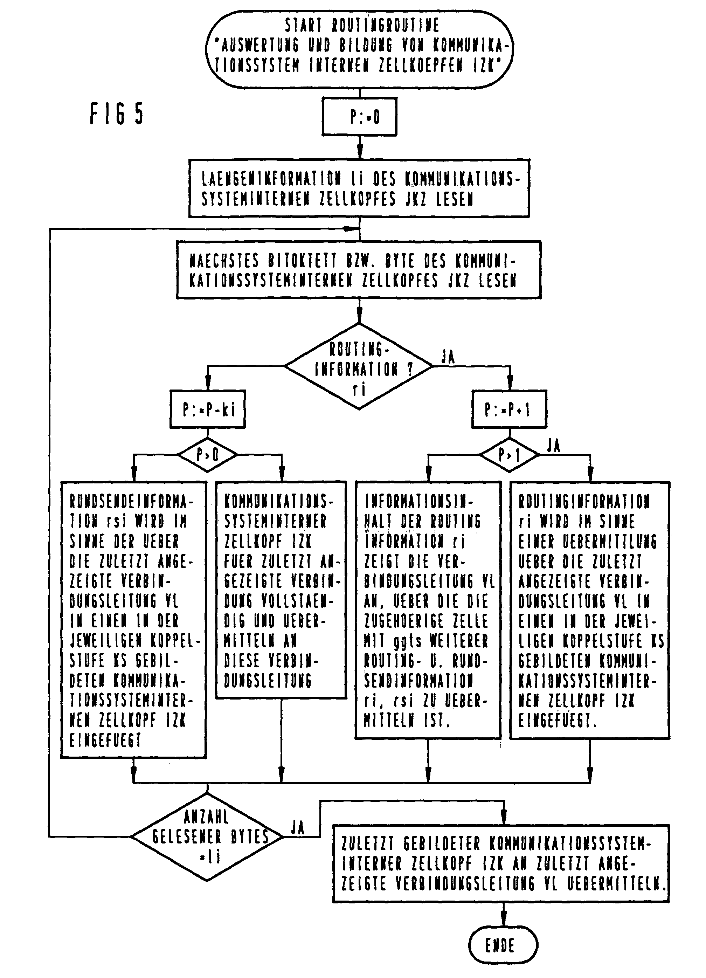

Das Bilden der kommunikationssysteminternen Zellköpfe IZK in den einzelnen Koppelstufen KS1...KS5 sowie die Auswertung der ankommenden kommunikationssysteminternen Zellköpfe IZK wird durch eine in jeder Koppelstufe KS1...KS5 implementierten Routing-Routine bewirkt. Eine mögliche programmtechnische Realisierung einer Routing-Routine ist durch ein sich selbst erläuterndes Ablaufdiagramm in FIG 5 angegeben.

In FIG 4 A,B ist eine ein Bitoktett bzw. eine 1 Byte umfassende Routinginformation ri und eine Rundsendeinformation rsi dargestellt. Die Kennzeichnung der Bytes als Routinginformation ri oder als Rundsendeinformation rsi erfolgt beispielsweise durch das letzte Bit B, wobei dieses letzte Bit B bei einer Rundsendeinformation rsi gleichzeitig die Rundsendeblockendeinformation bei repräsentiert. Dabei bestimmt beispielhaft eine logische "0"-Information des letzten Bit B eine Routinginformation ri und eine logische "l"-Information eine Rundsendeinformation rsi. In den vorhergehenden Bits der Routinginformation ri ist die eigentliche Routinginformation durch einen gemäß den in FIG 1 bis 3 angegebenen x-Wert x... repräsentiert. Durch diesen x-Wert x... wird jeweils die zur nächsten Koppelstufe KS führende Verbindungsleitung VL bestimmt, d. h. die Adresse dieser Verbindungsleitung VL angegeben. Bei Verwendung der ersten sechs Bits sind 64 Verbindungsleitungen VL und bei Verwendung der ersten sieben Bits sind 128 Verbindungsleitungen bestimmbar bzw. adressierbar. In der Rundsendeinformation rsi gemäß FIG 4 B wird durch die ersten Bits - beispielsweise 4 Bits - die Koppelstufeninformation ki angegeben, die vorteilhaft durch eine numerische Information repräsentiert ist. Sowohl die x-Werte x... als auch die Koppelstufeninformation ki werden bei Oktett- bzw. Byte-strukturierten kommunikationssysteminternen Zellköpfen IZK vorteilhaft binär codiert angegeben.

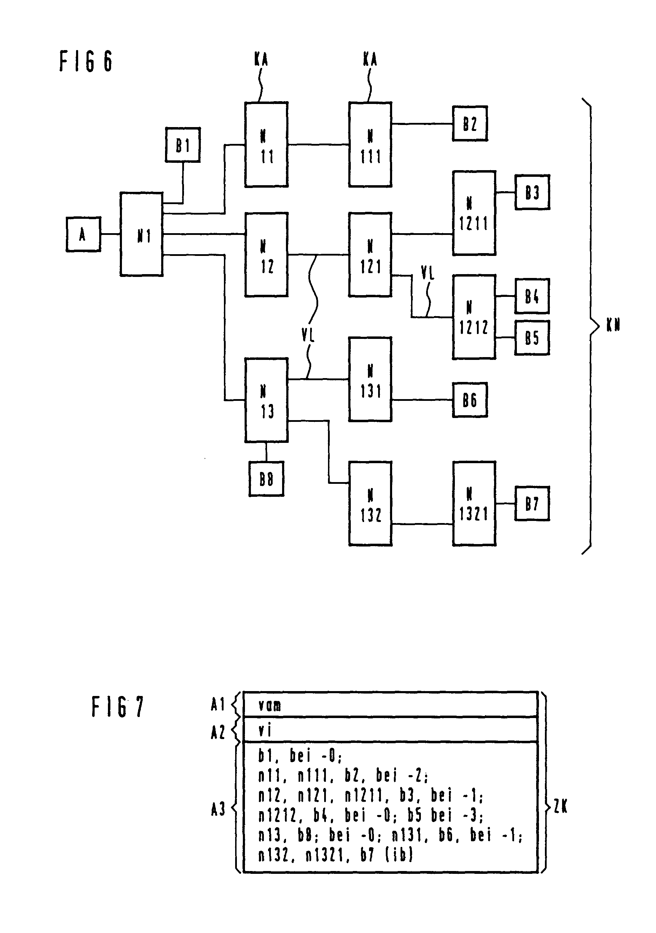

FIG 6 zeigt ein ATM-gemäß wirkendes Kommunikationsnetz KM, das durch mehrere Kommunikationssysteme KA gebildet ist. Jeder der Kommunikationssysteme KA - beispielsweise durch digitale Vermittlungsanlagen realisiert - ist eine Identifikation N1...N1321 zugeordnet. Ein Rundsendeursprungsteilnehmer A ist an das Kommunkationssystem mit der Identifikation N1 angeschlossen. Die Durchnumerierung der Identifikationen N1...N1321 ist auf dieses Ausführungsbeispiel abgestimmt, in der Praxis wird diese Numerierung auf die Netzhierarchie des jeweiligen Kommunkationsnetzes abgestimmt sein.

Für das Ausführungsbeispiel sei des weiteren angenommen, daß der Rundsendeursprungsteilnehmer A an acht Zielteilnehmer B1...B8 eine Nachricht rundsenden will. Der erste Rundsendezielteilnehmer B1 ist an das Kommunmikationssystem KA mit der Identifikation N1 angeschlossen. Der zweite Rundsende-Zielteilnehmer B2 ist mit einem Kommunikationssystem KA mit der Identifikation N111 verbunden, das über ein Kommunikationssystem KA mit der Identifikation N11 an das Kommunikationssystem KA mit der Identifikation N1 herangeführt ist. Dieses Kommunikationssystem KA mit der Identifikation N1 ist zusätzlich über die Kommunikationssysteme KA mit den Identifikationen N12, N121 an zwei weitere Kommunikationssysteme KA mit den Identifikationen N1211, N1212 geführt. An das Kommunikationssystem KA der Identifikation N1211 ist der dritte und an das Kommunikationssystem KA mit der Identifikation N1212 der vierte und der fünfte Rundsendezielteilnehmer B3...B5 angeschlossen. Das Kommunikationssystem KA mit der Identifikatlon N1 ist des weiteren mit einem Kommunikationssystem KA mit der Identifikation N13 verbunden, die eine Verbindung zum achten Rundsende-Zielteilnehmer B8 aufweist. An das Kommunikationssystem KA mit der Identifikation N13 sind die Kommunikationssysteme KA mit der Identifikation N131 und N132 herangeführt, wobei der sechste Rundsendezielteilnehmer B6 mit dem Kommunikationssystem KA mit der Identifikation N131 verbunden ist. Der siebente Rundsendezielteilnehmer B7 ist einem Kommunikationssystem KA mit der Identifikation N1321 zugeordnet, das an das Kommunikationssystem KA mit der Identifikation N132 angeschlossen ist. Die Verbindungen zwischen den Kommunikationssystemen KA sind durch die bekannten Verbindungsleitungen VL realisiert. In FIG 6 sind nur diejenigen Kommunikationssysteme KA und Rundsendeteilnehmer A, B1...B8 dargestellt, die in die beispielhafte Rundsendeverbindung einbezogen sind.

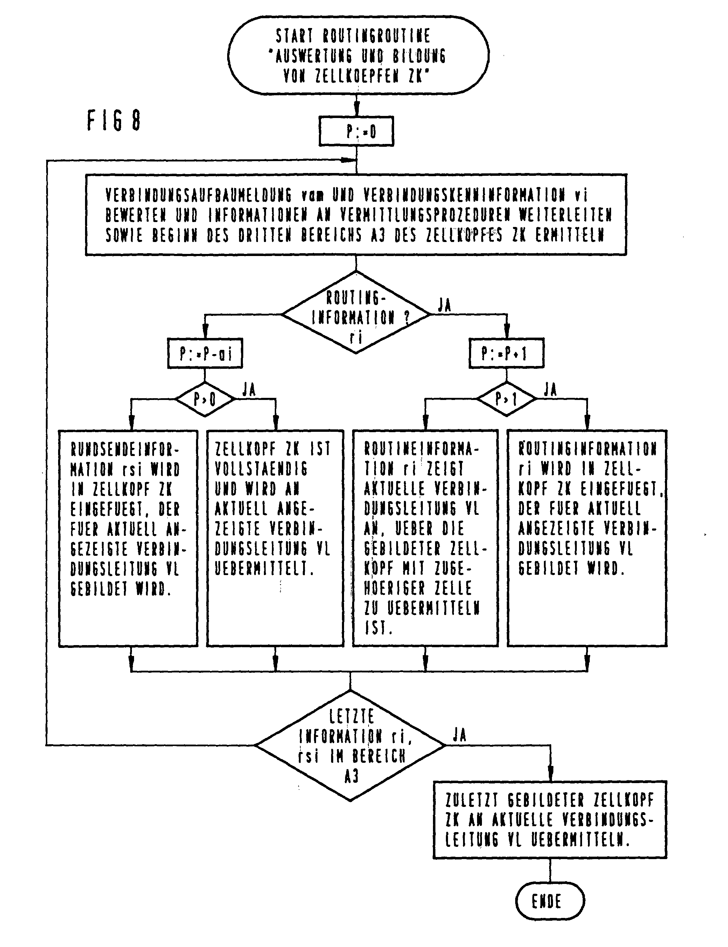

FIG 7 zeigt einen Zellkopf, der entweder vom Rundsende-Ursprungsteilnehmer A oder im Kommunikationssystem KA mit der Identifikation N1 gebildet wird und der Grundlage für die Vermittlung von rundzusendenden Zellen vom Rundsende-Ursprungsteilnehmer A zu den acht Rundsende-Zielteilnehmern B1...B8 darstellt. Im ersten Bereich A1 des Zellkopfes ZK - beispielsweise ein Bitoktett, ist beispielsweise eine Verbindungsaufbaumeldung vam enthalten. Durch diese Verbindungsaufbaumeldung vam wird das zu übermittelnde Paket als Verbindungsaufbaupaket bestimmt. Mit Hilfe dieses Verbindungsaufbaupakets wird eine für die weitere Übermittlung vorgesehene virtuelle Rundsendeverbindung vom Rundsende-Ursprungsteilnehmer A zu allen Rundsende-Zielteilnehmern B1...B8 eingerichtet.

Im zweiten Bereich A2 des Zellkopfes ZK ist eine Verbindungskenninformation vi eingefügt. Mit Hilfe dieser Verbindungskenninformation vi wird angezeigt, ob es sich bei der aufzubauenden Verbindung um eine Verbindung zwischen einem Teilnehmer A und einem Teilnehmer B oder um einen abzweigenden Pfad, d.h. abzweigende Verbindung einer Rundsendeverbindung handelt.

Im dritten Bereich A3 sind die für die Rundsendeverbindung erforderlichen Routinginformationen ri und Rundsendeinformationen rsi eingetragen. Die Routing und Rundsendeinformationen ri, rsi sind gemäß FIG 2 gebildet, jedoch ist anstelle des jeweils die Adresse von der jeweiligen Koppelstufe KS angebenden X-Wertes eine Kommunikationssystem-Identifikationsinformation n1...n1321 sowie eine den Rundsendezielteilnehmer B1...B8 bestimmende Zielinformation b1...b8 eingefügt. Die Rundsendeinformation rsi ist wie in FIG 2 durch eine Rundsendeblockendeinformation bei und durch eine zu FIG 2 unterschiedliche, jedoch gleich wirkende Abzweiginformation ai gebildet. Die Abzweiginformation ai stellt eine numerische Information dar, die, ausgehend von der zuletzt genannten Kommunikationssystem-Identifikationsinformation n... des jweiligen Pfades angibt, in welchem zurückliegenden Kommunikationssystem KA dieses Pfades, d.h. dem Kommunikationssystem KA mit der jeweiligen Kommunikationssystem-Identifikationsinformation n... eine Pfadverzweigung auftritt. Beispielhaft wird die zweite Zeile des dritten Bereichs A3 des Zellkopfes ZK erläutert. Durch die ersten beiden Kommunikationssystem-Identifikationsinformationen nll, nlll wird angegeben, daß die rundzusendenden Zellen über die Kommunikationssysteme KA mit der Identifikation N11 und N111 zu vermitteln sind. Die folgende Zielinformation b2 gibt an, daß die rundzusendenden Zellen an den an das Kommunikationssystem KA mit der Identifikation N111 angeschlossenen Rundsende-Teilnehmer B2 zu übermitteln ist. Die folgende Rundsendeblockendeinformation bei zeigt das Ende des Pfades zum zweiten Rundsende-Zielteilnehmer B2 an. Die folgende numerische Information 2 stellt die Abzweiginformation ai dar und gibt an, daß, ausgehend vom zuletzt genannten Kommunikationssystem KA mit der Identifikation N111 in der zweiten zurückliegenden, d.h. in dem Kommunikationssystem KA der Identifikation N1 eine weitere Pfadverzweigung auftritt. Analog zur erläuterten zweiten Zeile und zum erfindungsgemäßen Verfahren nach FIG 2 werden die weiteren Routing- bzw. Rundsendeinformationen ri, rsi des Zellkopfes ZK für jeden weiteren Pfad, bzw. abzweigenden Pfad der Rundsendeverbindung gebildet.

Analog zur Darstellung in FIG 3 werden in den Kommunikationssystemen KA durch Auswerten bzw. Bewerten der ankommenden Zellköpfe ZK die Zellen entsprechend der angegebenen Routing- und Rundsendeinformationen ri, rsi an die folgenden Kommunikationssysteme KA übermittelt. Dabei werden die das jeweilige Kommunikationssystem KA betreffenden Routing- bzw. Rundsendeinformationen ri, rsi entfernt und die für den jeweiligen Pfad werden in einen neu gebildeten Zellkopf ZK eingefügt und zusammen mit der Zelle zum weiteren Kommunikationssystem (KA) übermittelt. Die Bildung dieser weiteren Zellköpfe ZK erfolgt analog zu der in FIG 3 dargestellten Bildung eines kommunikationssysteminternen Zellkopfes IKZ 2.

Das Bewerten und Bilden der weiteren Zellköpfe ZK in den Kommunikationssystemen KA wird durch eine gleichartig wirkende Routing-Routine gemäß FIG 5 erreicht. Eine mögliche programmtechnische Realisierung für ATM-Kommunikationsnetze ist durch ein sich selbst erläuterndes Ablaufdiagramm in FIG 8 dargestellt.

Das erfindungsgemäße Verfahren ist in nach vorhandenen Standards konzipierten ATM-Kommunikationsnetzen anwendbar, wobei in die Zellköpfe dann weitere, im Standard definierte Informationen einfügbar sind. Dies ist beispielhaft durch die nach der Zielinformation B7 in Klammern angegebene Informationen ib angezeigt. Dies sind beispielsweise Subadressen der Rundsende-Zielteilnehmer B1...B8 und insbesondere Informationen, die nicht das Netz, sondern die Teilnehmereinrichtungen betreffen, beispielsweise Anzeigeinformationen. Dies sind des weiteren auch Informationen, die den Signalisierungsreferenzpunkt des Teilnehmers angeben. Diese Information ist für eine Rückübermittlung von Zellen von dem Rundsende-Zielteilnehmer B1...B8 zu dem Rundsendeursprungsteilnehmer A von Bedeutung.

## Patentansprüche

1. Verfahren zum Rundsenden von Zellen in einem im Asynchro-Transfer-Modus wirkenden und durch Kommunikationssysteme (KA) gebildeten Kommunikationsnetz (KN),
- bei dem im Sinne einer Zellenselbststeuerung durch das Kommunikationsnetz (KN) in jeder Zelle ein mit Routinginformationen (ri) versehener Zellkopf (ZK) vorgesehen ist, wobei die Routinginformationen (ri) die jeweilige Zelle über einen einzigen Pfad durch das Kommunikationsnetz (KN) steuern, **dadurch gekennzeichnet,**
- **daß** im Sinne der Selbststeuerung von rundzusendenden Zellen durch das Kommunikationsnetz (KN) für jeden zusätzlichen Pfad in jedem der n Kommunikationssysteme (KA) des Kommunikationsnetzes (KN) ein erneutes Aussenden der rundzusendenden Zellen in den jeweiligen Kommunikationssystemen (KA) bewirkende, kommunikationssystemspezifische Rundendeinformation (rsi) und weitere Routinginformationen (ri) gebildet werden, wobei die einer Rundsendeinformation (rsi) zugeordneten Routinginformationen (ri) jeweils einen Pfad der erneut auszusendenden Zelle durch die jeweils verbleibenden Kommunikationssysteme (KA) des Kommunikationsnetzes (KN) zu einem vorgegebenen Rundsendezielteilnehmer (B1...B8) angeben,
- **daß** in jedem Kommunikationssystem (KA) die zusammen mit der Zelle übermittelten Rundsendeinformationen (rsi) und Routinginformationen (ri) bewertet und die Zelle sowie die im Zellkopf (ZK) angegebenen Rundsendeinformationen (rsi) einschließlich der Routinginformationen (ri) über durch die Routinginformationen (ri) bestimmte Verbindungsleitungen (VL) bzw. Anschlußleitungen an das jeweils folgende Kommunikationssystem (KA) bzw. den Rundsendezielteilnehmer (B1...B8) übermittelt werden, wobei die das jeweilige Kommunikationssystem (KA) betreffenden Rundsendeinformationen (rsi) und Routinginformationen (ri) entfernt werden.

2. Verfahren nach Anspruch 1,
**dadurch gekenzeichnet,**
daß die Routinginformationen (ri) jeweils durch zumindest eine den Rundsendezielteilnehmer (B1...B8) an einem Zielkommunikationssystem(KA) bestimmende Zielinformation (b1,...,b8) und durch den jeweiligen Pfad durch das Kommunikationsnetz (KN) angebende Kommunikationssystem-Identifikationsinformationen (N1,...,N1321) repräsentiert ist,
wobei jedem Kommunikationssystem (KA) des Kommunikationsnetzes (KN) eine unterschiedliche Kommunikationssystem-Identifikationsinformation (N1,..., N1321) zugeordnet ist.

3. Verfahren nach Anspruch 1 oder 2,
**dadurch gekenzeichnet,**
daß die Routinginformation (ri) durch jeweils weitere, jeweils an die Zielinformation (b1,..., b8) angefügte Subadressinformation und/oder Teilnehmerinformationen und/oder Teilnehmeranzeigeinformationen und/oder Signalisierungsreferenzpunktinformation repräsentiert ist.

4. Verfahren nach einem der Ansprüche 1 bis 3,
**dadurch gekenzeichnet,**
daß die Rundsendeinformation (rsi) durch eine das Ende des jeweiligen Pfades anzeigende Rundsendeblockendeinformation (bei) und durch eine eine Pfadverzweigung in einer der Kommunikationssysteme (KA) anzeigende Abzweiginformation (ai) gebildet ist.

5. Verfahren nach Anspruch 4 in seiner Abhängigkeit vom Anspruch 2,
**dadurch gekenzeichnet,**
daß die Abzweiginformation (ai) durch eine numerische Information repräsentiert ist, die, ausgehend von der zuletzt angegebenen Kommunikationssystem-Identifikationsinformation (N1,...,N1321) die Anzahl der auf dem durch die vorhergehende Rundsendeinformation (rsi,...) bestimmten Pfad zurückliegenden Kommunikationssysteme (KA) angibt, in dem eine Pfadverzweigung auftritt.

6. Verfahren nach einem der vorhergehenden Ansprüche,
**dadurch gekenzeichnet,**
daß die Routing- und Rundsendeinformationen (ri, rsi) in Verbindungsaufbaumeldungen von einem Ursprungsteilnehmer (A) zu den Zielteilnehmern (B1...B8) übermittelt werden,
wobei durch die Rundsende- und Routinginformationen (rsi, ri) virtuelle Verbindungen von dem Ursprungsteilnehmer (A) zu den Zielteilnehmern (B1...B8) eingerichtet werden.

7. Verfahren nach Anspruch 5,
**dadurch gekenzeichnet,**
daß in jedem Kommunikationssystem (KA) mit Hilfe einer jeweils zugeordneten Routingroutine jeder Zellkopf (ZK) auf das Vorliegen von Rundsendeinformationen (rsi) bzw. Routinginformationen (ri) verifiziert wird,
- daß bei Vorliegen einer ersten Routinginformation (ri) im Zellkopf (ZK) oder nach einer Rundsendeinformation (rsi) durch diese Routinginformationen (ri) die zum nächsten Kommunikationssystem (KA) führende Verbindungsleitung (VL) oder die zu einem Zielteilnehmer (B1...B8) führende Anschlußleitung bestimmt ist,
- daß bei Vorliegen weiterer Routinginformationen (ri) diese im Sinne einer Übermittlung über die zuletzt bestimmte Verbindungsleitung (VL) in einen in dem jeweiligen Kommunikationssystem (KA) gebildeten Zellkopf (ZK) eingefügt werden, wobei die erste Routinginformation (ri) nicht in den Zellkopf (ZK) eingefügt wird,
- daß bei Vorliegen einer Rundsendeinformation (rsi)
-- das Ende eines vorhergehend zusammengestellten Routing-Informationsblocks für eine Übermittlung über die zuletzt bestimmte Verbindungsleitung (VL) angezeigt wird, und
-- daß in Abhängigkeit von dem Informationsinhalt der Abzweiginformation (ai) die Rundsendeinformation (rsi) entfernt oder in den Zellkopf (ZK) eingefügt wird.

8. Verfahren zum Rundsenden von Zellen in einer Asynchron-Transfer-Modus wirkenden Koppelstruktur (SN) eines Kommunikationssystems,
- bei dem im Sinne einer Zellenselbststeuerung durch die Koppelstruktur (SN) vor jede Zelle ein mit Routinginformationen (ri) versehener, kommunikationssysteminterner Zellkopf (IZK) angefügt wird, wobei für jede Zelle Routinginformationen (ri), die die jeweilige Zelle über einen einzigen Pfad durch n Koppelstufen (ST) steuern, durch eine Koppelstruktursteuerung gebildet und in den kommunikationssysteminternen Zellkopf (IZK) eingefügt werden,
**dadurch gekenzeichnet,**
- daß Eingangs- und Ausgangsleitungen (EL, AL) der aus n Koppelstufen (KS) gebildeten und durch Verbindungsleitungen (VL) vermaschten Koppelstruktur (SN) durch teilnehmersignalisierte Rundsendeursprungs- und Zielinformationen bestimmt werden,
- daß im Sinne der Selbststeuerung von rundzusendenden Zellen durch die Koppelstruktur (SN) für jeden zusätzlichen Pfad in jeder der n Koppelstufen (ST) der Koppelstruktur (SN) ein erneutes Aussenden der rundzusendenden Zellen in den jeweiligen Koppelstufen bewirkende, koppelstufenspezifische Rundsendeinformationen (rsi) und daran angefügte weitere Routinginformationen (ri) gebildet werden, wobei die an eine Rundsendeinformation (rsi) angefügten Routinginformationen (ri) jeweils einen Pfad der erneut auszusendenden Zelle durch die jeweils verbleibenden Koppelstufen der Koppelstruktur (SN) zu einer vorgegebenen Ausgangsleitung (AL) angeben,
- daß für die Koppelstufe (ST), in der die erste Pfadverzweigung auftritt, für jeden dort abzweigenden Pfad die ermittelten Rundsendeinformationen (rsi) einschließlich der zugehörigen Routinginformationen (ri) in Abhängigkeit von der Reihenfolge der folgenden Koppelstufen und den Pfadverzweigungen in diesen Koppelstufen zusammengestellt und in den kommunikationssysteminternen Zellkopf (IZK) eingefügt werden,
- bei dem in jeder Koppelstufe die zusammen mit der Zelle übermittelten Rundesendeinformationen (rsi) und Routinginformationen (ri) bewertet und die Zelle sowie Rundsendeinformationen (rsi) einschließlich der Routinginformationen (ri) durch einen in der jeweiligen Koppelstufe gebildeten, weiteren kommunikationssysteminternen Zellkopf (IZK) über durch die Rundsendeinformationen (rsi) und Routinginformationen (ri) bestimmte Verbindungsleitungen (VL) an die folgende Koppelstufe übermittelt werden, wobei die die jeweiligen Koppelstufen (ST) betreffenden Rundsendeinformationen (rsi) und Routinginformatioen (ri) entfernt werden.

9. Verfahren nach Anspruch 8,
**dadurch gekenzeichnet,**
daß die Rundsendeinformationen (rsi) durch eine das Ende des vorhergehenden Routinginformationsblocks anzeigende Rundsendeblockendeinformation (bei) und durch eine eine Pfadverzweigung in einer dern Koppelstufen (ST) anzeigende Koppelstufeninformation (ki) gebildet ist.

10. Verfahren nach Anspruch 9,
**dadurch gekenzeichnet,**
daß die Koppelstufeninformation (ki) durch eine numerische Information repräsentiert ist, die die Anzahl der auf dem durch die vorhergehende Rundsendeinformation (rsi,...) bestimmten Pfad zurückliegenden Verbindungsleitungen (VL) angibt, daß mit Hilfe der numerischen Information eine zurückliegende Verbindungsleitung (VL) ermittelt wird und dadurch die Koppelstufe (KS), von der Zellen über die ermittelte Verbindungsleitung (VL) übermittelt werden, als Koppelstufe (KS) bestimmt ist, in der eine Pfadverzweigung auftritt.

11. Verfahren nach einem der Ansprüche 8 bis 10,
**dadurch gekenzeichnet,**
daß für jeden kommunisationssysteminternen Zellkopf (IZK) eine seinen Datenumfang repräsentierende Längeninformation (li) ermittelt und in den kommunikationssysteminternen Zellkopf (IZK) eingefügt wird.

12. Verfahren nach Anspruch 11,
**dadurch gekenzeichnet,**
daß in einem kommunikationssysteminternen , byte- bzw. oktettstrukturierten Zellkopf (IZK) die Rundsendeinformation (rsi) und die Routinginformation (ri) durch ein binär codiertes Bitoktett bzw. Byte repräsentiert sind, und daß die Längeninformation (li) durch die Anzahl der den kommunikationssysteminternen Zellkopf (IZK) umfassenden Bitoktetts bzw. Bytes bestimmt ist.

13. Verfahren nach Anspruch 12,
**dadurch gekenzeichnet,**
daß in jeder Koppelstufe (KS) mit Hilfe einer jeweils zugeordneten Routingroutine jeder kommunikationssysteminterne Zellkopf (IZK) oktett- bzw. bytesequentiell auf das Vorliegen von Rundsendeinformationen (rsi) oder Routinginformationen (ri) verifiziert wird,
- daß bei Vorliegen einer ersten Routinginformation (ri) im kommunikationsinternen Zellkopf (IZK) oder nach einer Rundsendeinformation (rsi) durch diese Routinginformation (ri) die zur nächsten Koppelstufe (KS) führende Verbindungsleitung (VL) bestimmt ist,
- daß bei Vorliegen weiterer Routinginformationen (ri) diese im Sinne einer Übermittlung über die zuletzt bestimmte Verbindungsleitung (VL) in einen ein der jeweiligen Koppelstufe (KS) gebildeten kommunikationssysteminternen Zellkopf (IZK) eingefügt werden,
- daß bei Vorliegen einer Rundsendeinformation (rsi)
-- das Ende eines vorhergehend zusammengestellten Routinginformationsblocks für eine Übermittlung über die zuletzt bestimmte Verbindungsleitung (VL) angezeigt wird, und
-- daß in Abhängigkeit von dem Informationsinhalt der Koppelstufeninformation (ki) die Rundsendeinformation (rsi) entfernt oder in dem kommunikationssysteminternen Zellkopf (IZK) eingefügt wird.

## Claims

1. Method for broadcasting cells in a communications network (KN) which acts in asynchronous transfer mode and is formed by communications systems (KA),
- in which, for the purpose of cell self-routing through the communications network (KN), each cell contains a cell header (ZK) provided with routing information (ri), the routing information (ri) routing the respective cell via a single path through the communications network (KN), **characterized**
- **in that**, for the purpose of cells to be broadcast being self-routed through the communications network (KN), communications-system-specific broadcast information (rsi) bringing about fresh transmission of the cells to be broadcast in the respective communications systems (KA) and further routing information (ri) are formed for each additional path in each of the n communications systems (KA) of the communications network (KN), the routing information (ri) associated with a broadcast information item (rsi) indicating a respective path for the cell which is to be transmitted afresh through the respectively remaining communications systems (KA) of the communications network (KN) to a prescribed broadcast destination subscriber (B1...B8),
- **in that** each communications system (KA) assesses the broadcast information (rsi) and routing information (ri) transmitted together with the cell, and the cell and the broadcast information (rsi) indicated in the cell header (ZK), including the routing information (ri), are transmitted via connecting lines (VL) or access lines determined by the routing information (ri) to the respectively subsequent communications system (KA) or to the broadcast destination subscriber (B1...B8), with the broadcast information (rsi) and routing information (ri) which concern the respective communications system (KA) being removed.

2. Method according to Claim 1,
**characterized**
**in that** the routing information (ri) is respectively represented by at least one destination information item (b1,...,b8) which determines the broadcast destination subscriber (B1...B8) on a destination communications system (KA) and by communications system identification information (N1,...,N1321) which indicates the respective path through the communications network (KN), each communications system (KA) of the communications network (KN) having a different communications system identification information item (N1,...,N1321) associated with it.

3. Method according to Claim 1 or 2,
**characterized**
**in that** the routing information (ri) is represented by respective further subaddress information, respectively appended to the destination information (b1,...,b8), and/or subscriber information and/or subscriber indication information and/or signalling reference point information.

4. Method according to one of Claims 1 to 3,
**characterized**
**in that** the broadcast information (rsi) is formed by a broadcast block end information item (bei), indicating the end of the respective path, and by a branch information item (ai), indicating a path branch in one of the communications systems (KA).

5. Method according to Claim 4 in its dependence on Claim 2,
**characterized**
**in that** the branch information (ai) is represented by a numerical information item which, on the basis of the last communications system identification information (N1,...,N1321) indicated, indicates the number of communications systems (KA) passed on the path determined by the preceding broadcast information (rsi,...), in which path a path branch occurs.

6. Method according to one of the preceding claims,
**characterized**
**in that** the routing and broadcast information (ri, rsi) is transmitted in connection setup messages from an originating subscriber (A) to the destination subscribers (B1...B8), the broadcast and routing information (rsi, ri) setting up virtual connections from the originating subscriber (A) to the destination subscribers (B1...B8).

7. Method according to Claim 5,
**characterized**
**in that** each communications system (KA) uses a respectively associated routing routine to verify each cell header (ZK) for the presence of broadcast information (rsi) or routing information (ri),
- **in that** if there is a first routing information item (ri) in the cell header (ZK) or after a broadcast information item (rsi), this routing information (ri) determines the connecting line (VL) leading to the next communications system (KA) or the access line leading to a destination subscriber (B1...B8),
- **in that** if there is further routing information (ri), this information is inserted into a cell header (ZK) formed in the respective communications system (KA) for the purpose of transmission via the last connecting line (VL) determined, and the first routing information (ri) is not inserted into the cell header (ZK),
- **in that** if there is a broadcast information item (rsi),
-- the end of a previously compiled routing information block for transmission via the last connecting line (VL) determined is indicated, and
-- **in that**, on the basis of the information content of the branch information (ai), the broadcast information (rsi) is removed or is inserted into the cell header (ZK).

8. Method for broadcasting cells in a communication system's switching structure (SN) which acts in asynchronous transfer mode,
- in which, for the purpose of cell self-routing through the switching structure (SN), a communications-system-internal cell header (IZK) provided with routing information (ri) is appended in front of each cell, with routing information (ri) which routes the respective cell via a single path through n switching stages (ST) being formed for each cell by a switching structure controller and being inserted into the communications-system-internal cell header (IZK),
**characterized**
- **in that** input and output lines (EL, AL) for the switching structure (SN), which is formed from n switching stages (KS) and is interconnected by connecting lines (VL), are determined by subscriber-signalled broadcast originating and destination information,
- **in that**, for the purpose of cells to be broadcast being self-routed through the switching structure (SN), switching-stage-specific broadcast information (rsi) bringing about fresh transmission of the cells to be broadcast in the respective switching stages and further routing information (ri) appended to said broadcast information are formed for each additional path in each of the n switching stages (ST) of the switching structure (SN), the routing information (ri) appended to a broadcast information item (rsi) indicating a respective path for the cell which is to be transmitted afresh through the respectively remaining switching stages of the switching structure (SN) to a prescribed output line (AL),
- **in that**, for the switching stage (ST) in which the first path branch appears, for each path branching off there, the ascertained broadcast information (rsi), including the associated routing information (ri), is compiled and inserted into the communications-system-internal cell header (IZK) on the basis of the order of the subsequent switching stages and on the basis of the path branches in these switching stages,
- in which each switching stage assesses the broadcast information (rsi) and routing information (ri) transmitted together with the cell, and the cell and the broadcast information (rsi), including the routing information (ri), are transmitted via connecting lines (VL) determined by the broadcast information (rsi) and routing information (ri) to the subsequent switching stage by a further communications-system-internal cell header (IZK) formed in the respective switching stage, with the broadcast information (rsi) and routing information (ri) which concern the respective switching stages (ST) being removed.

9. Method according to Claim 8,
**characterized**
**in that** the broadcast information (rsi) is formed by a broadcast block end information item (bei), indicating the end of the previous routing information block, and by a switching stage information item (ki), indicating a path branch in one of then switching stages (ST).

10. Method according to Claim 9,
**characterized**
**in that** the switching stage information (ki) is represented by a numerical information item which indicates the number of connecting lines (VL) passed on the path determined by the preceding broadcast information (rsi,...), in that the numerical information is used to ascertain a connecting line (VL) which has been passed, and as a result the switching stage (KS) from which cells are transmitted via the ascertained connecting line (VL) is determined as the switching stage (KS) in which a path branch occurs.

11. Method according to one of Claims 8 to 10,
**characterized**
**in that**, for each communications-system-internal cell header (IZK), a length information item (li) representing the cell header's data load is ascertained and is inserted into the communications-system-internal cell header (IZK).

12. Method according to Claim 11,
**characterized**
**in that** the broadcast information (rsi) and the routing information (ri) in a communications-system-internal cell header (IZK) with a byte or octet structure are represented by a binary-coded bit octet or byte, and in that the length information (li) is determined by the number of bit octets or bytes which cover the communications-system-internal cell header (IZK).

13. Method according to Claim 12,
**characterized**
**in that** each switching stage (KS) uses a respectively associated routing routine to verify each communications-system-internal cell header (IZK), by sequential octets or bytes, for the presence of broadcast information (rsi) or routing information (ri),
- **in that** if there is a first routing information item (ri) in the communications-system-internal cell header (IZK) or after a broadcast information item (rsi), this routing information (ri) determines the connecting line (VL) leading to the next switching stage (KS),
- **in that** if there is further routing information (ri), this information is inserted into a communications-system-internal cell header (IZK) formed in the respective switching stage (KS) for the purpose of transmission via the last connecting line (VL) determined,
- **in that** if there is a broadcast information item (rsi)
-- the end of a previously compiled routing information block for transmission via the last connecting line (VL) determined is indicated, and
-- **in that**, on the basis of the information content of the switching stage information (ki), the broadcast information item (rsi) is removed or is inserted in the communications-system-internal cell header (IZK).

## Revendications

1. Procédé pour diffuser des cellules dans un réseau de communication (KN) opérant en mode de transfert asynchrone et formé par des systèmes de communication (KA)
- dans lequel une tête de cellule (ZK) munie d'informations de routing est prévue dans chaque cellule au sens d'une commande automatique de cellule par le réseau de communication (KN), les informations de routing (ri) commandant la cellule respective par le réseau de communication (KN) à l'aide d'un seul chemin, **caractérisé en ce que**
- une information de diffusion (rsi) spécifique au système de communication et d'autres informations de routing (ri) sont formées, au sens de la commande automatique de cellules à diffuser par le réseau de communication (KN), pour chaque chemin supplémentaire dans chacun des n systèmes de communication (KA) du réseau de communication (KN), ces informations ayant pour effet une nouvelle diffusion des cellules à diffuser dans les systèmes de communication (KA) respectifs, par le réseau de communication (KN), les informations de routing (ri) attribuées à une information de diffusion (rsi) indiquant respectivement un chemin de la cellule à diffuser de nouveau par les systèmes de communication (KA) restants respectivement du réseau de communication (KN) à un abonné cible de diffusion (B1...B8),
- dans chaque système de communication (KA), les informations de diffusion (rsi) transmises avec la cellule et les informations de routing (ri) sont évaluées, et la cellule ainsi que les informations de diffusion (rsi) indiquées dans la tête de cellule (ZK), y compris les informations de routing (ri), sont transmises à l'aide de lignes de connexion (VL) définies par les informations de routing (ri) resp. de lignes de raccordement au système de communication (KA) suivant resp. à l'abonné cible de diffusion (B1....B8), les informations de diffusion (rsi) concernant le système de communication (KA) respectif et les informations de routing (ri) étant supprimées.

2. Procédé selon la revendication 1, **caractérisé en ce que** les informations de routing (ri) sont représentées respectivement par au moins une information cible (b1,..., b8) définissant l'abonné cible de diffusion (B1...B8) d'un système de communication (KA), et par le chemin respectif dans les informations d'identification du système de communication (N1,...,N1321) indiquant le réseau de communication (KN), une information d'identification du système de communication (N1,...,N1321) différente étant attribuée à chaque système de communication (KA) du réseau de communication (KN).

3. Procédé selon la revendication 1 ou 2, **caractérisé en ce que** l'information de routing (ri) est représentée par respectivement d'autres informations de sous-adresse jointes à l'information cible (b1,...., b8) et/ou des informations sur l'abonné et/ou des informations d'affichage de l'abonné et/ou une information de signalisation de point de référence.

4. Procédé selon l'une des revendications 1 à 3, **caractérisé en ce que** l'information de diffusion (rsi) est formée par une information de fin de bloc de diffusion (bei) affichant la fin du chemin respectif et par une information de dérivation (ai) affichant une dérivation du chemin dans un des systèmes de communication (KA).

5. Procédé selon la revendication 4 en dépendant de la revendication 2, **caractérisé en ce que** l'information de dérivation (ai) est représentée par une information numérique qui, partant de l'information d'identification du système de communication (N1,...,N1321) indiquée en dernier, indique le nombre des systèmes de communication en amont sur le chemin défini par les informations de diffusion (rsi,...) précédentes dans lesquels une dérivation du chemin se produit.

6. Procédé selon l'une des revendications précédentes, **caractérisé en ce que** les informations de routing et les informations de diffusion (ri, rsi) sont transmises en messages d'établissement de communication par un abonné d'origine (A) vers les abonnés cibles (B1....B8), des liaisons virtuelles entre l'abonné d'origine (A) et les abonnés cibles (B1...B8) étant établies par les informations de diffusion et les informations de routing (rsi, ri).

7. Procédé selon la revendication 5, **caractérisé en ce que** la présence d'informations de diffusion (rsi) resp. d'informations de routing (ri) est vérifiée pour chaque tête de cellule (ZK) dans chaque système de communication (KA) à l'aide d'une routine de routing respectivement attribuée,
- **en ce que,** en cas de présence d'une première information de routing (ri) dans la tête de cellule (ZK) ou après une information de diffusion (rsi) par ces informations de routing (ri), on détermine la ligne de connexion (VL) menant au système de communication (KA) suivant, ou la ligne de raccordement menant à un abonné cible (B1....B8),
- **en ce que,** en cas de présence d'autres informations de routing (ri), celles-ci sont insérées au sens d'une transmission à l'aide de la ligne de connexion (VL) déterminée en dernier dans une tête de cellule (ZK) formée dans le système de communication (KA) respectif, la première information de routing (ri) n'étant pas insérée dans la tête de cellule (ZK),
- **en ce que,** en cas de présence d'une information de diffusion (rsi) la fin d'un bloc d'informations de routing constitué précédemment est affichée pour une transmission à l'aide de la ligne de connexion (VL) déterminée en dernier, et
- **en ce que,** en fonction du contenu des informations de dérivation (ai), l'information de diffusion (rsi) est supprimée ou insérée dans la tête de cellule (ZK).

8. Procédé pour diffuser des cellules dans une structure de connexion (SN) d'un système de communication opérant en mode de transfert asynchrone,
- dans lequel une tête de cellule (IZK) interne au système de communication et munie d'informations de routing (ri) est jointe avant chaque cellule au sens d'une commande automatique des cellules par la structure de connexion (SN), les informations de routing (ri), qui commandent la cellule respective à l'aide d'un seul chemin par n étapes de connexion (ST), étant formées pour chaque cellule par une commande de structure de connexion et étant insérées dans la tête de cellule (IZK) interne au système de communication,
**caractérisé en ce que**
- les lignes d'entrée et de sortie (EL, AL) de la structure de connexion (SN) formée par n étapes de connexion (KS) et interconnectée par les lignes de connexion (VL) sont déterminées par des informations de diffusion d'origine signalisées par l'abonné et par des informations cibles,
- une information de diffusion (rsi) spécifique à l'étape de connexion et d'autres informations de routing (ri) qui y sont insérées sont formées, au sens de la commande automatique de cellules à diffuser par la structure de connexion (SN), pour chaque chemin supplémentaire dans chacune des n étapes de connexion (ST), ces informations ayant pour effet une nouvelle diffusion des cellules à diffuser dans les structures de connexion (SN) respectives, les informations de routing (ri) jointes à une information de diffusion (rsi) indiquant respectivement un chemin de la cellule à diffuser de nouveau par les étapes de connexion restantes respectivement de la structure de connexion (SN) à une ligne de sortie prédéfinie (AL),
- pour l'étape de connexion (ST), dans laquelle se produit la première dérivation de chemin, pour chaque chemin qui y est dérivé, les informations de diffusion (rsi) déterminées, y compris les informations de routing (ri) correspondantes sont assemblées dans ces étapes de connexion en fonction de la séquence des étapes de connexion suivantes et des dérivations de chemin, et sont insérées dans la tête de cellule (IZK) interne au système,
- dans lequel les informations de diffusion (rsi) transmises avec la cellule et les informations de routing (ri) sont évaluées dans chaque étape de connexion, et la cellule ainsi que les informations de diffusion (rsi), y compris les informations de routing (ri), sont transmises par une tête de cellule interne à d'autres systèmes de communication, formée dans l'étape de connexion respective à l'étape de connexion suivante au moyen des lignes de connexion (VL) déterminées par les informations de diffusion (rsi) et les informations de routing (ri), les informations de diffusion (rsi) concernant les étapes de connexion (ST) respectives et les informations de routing (ri) étant supprimées.

9. Procédé selon la revendication 8, **caractérisé en ce que** les informations de diffusion (rsi) sont formées par une information de fin de bloc de diffusion (bei) affichant la fin du bloc d'information de routing précédent et par une information d'étape de connexion (ki) affichant une dérivation de chemin dans l'une des étapes de connexion (ST).

10. Procédé salon la revendication 9, **caractérisé en ce que** l'information d'étape de connexion (ki) est représentée par une information numérique, qui indique le nombre de lignes de connexion (VL) en amont sur le chemin défini par l'information de diffusion (rsi,...) précédente, **en ce qu'**une ligne de connexion (VL) en aval est déterminée à l'aide de l'information numérique et qu'ainsi l'étape de connexion (KS), à partir de laquelle des cellules sont transmises à l'aide de la ligne de connexion (VL) déterminée, est définie comme étape de connexion (KS) dans laquelle se produit une dérivation de chemin.

11. Procédé selon tune des revendications 8 à 10, **caractérisé en ce qu'**une information de longueur (li) représentant son volume de données est déterminée pour chaque tête de cellule (IZK) interne au système de communication, et insérée dans la tête de cellule (IZK) interne au système de communication.

12. Procédé selon la revendication 11, **caractérisé en ce que** dans une tête de cellule (IZK) interne au système de communication, structurée par octets, l'information de diffusion (rsi) et l'information de routing (ri) sont représentées par un octet codé de manière binaire, **et en ce que** l'information de longueur (li) est déterminée par le nombre d'octets comprenant la tête de cellule (IZK) interne au système de communication.

13. Procédé selon la revendication 12, **caractérisé en ce que** la présence d'informations de diffusion (rsi) ou d'informations de routing (ri) est vérifiée pour chaque tête de cellule (IZK) interne au système de communication dans chaque étape de connexion (KS) à l'aide d'une routine de routing par séquence d'octets,
- **en ce que,** en cas de présence d'une première information de routing (ri) dans la tête de cellule (IZK) interne au système de communication ou après une information de diffusion (rsi) par ces informations de routing (ri), on détermine la ligne de connexion (VL) menant à l'étape de connexion (KS) suivante,
- **en ce que,** en cas de présence d'autres informations de routing (ri), celles-ci sont insérées au sens d'une transmission à l'aide de la ligne de connexion (VL) déterminée en dernier dans une tête de cellule (IZK) interne au système de communication formée dans l'étape de connexion (KS) respective,
- **en ce que,** en cas de présence d'une information de diffusion (rsi) - la fin d'un bloc d'informations de routing constitué précédemment est affiché pour une transmission à l'aide de la ligne de connexion (VL) déterminée en dernier, et
- **en ce que**, en fonction du contenu des informations d'étape de connexion (ki), l'information de diffusion (rsi) est supprimée ou insérée dans la tête de cellule (IZK) interne au système de communication.
